# EUROPEAN PATENT SPECIFICATION

(11) **EP 4 312 454 B1**
(45) Date of publication and mention of the grant of the patent: **14.05.2025**
(21) Application number: 23186132.9
(22) Date of filing: 18.07.2023
(51) Int. Cl.: H04W 60/00, H04W 88/06, H04W 36/14, H04W 48/18

(54) **5G REGISTRATION RESULTANT VALUE HANDLING**
HANDHABUNG VON RESULTIERENDEN 5G-REGISTRIERUNGSWERTEN
GESTION DE VALEUR RÉSULTANTE D'ENREGISTREMENT 5G

(30) Priority: 29.07.2022 US 202263369770 P; 04.07.2023 US 202318218097
(43) Date of publication of application: 31.01.2024
(73) Proprietor: MEDIATEK INC., Hsin-Chu 300 (TW)
(72) Inventor: LIN, Yu-Hsin, Hsinchu City 30078 (TW); YANG, Yung-Chun, Hsinchu City 30078 (TW); LIN, Yuan-Chieh, Hsinchu City 30078 (TW)
(74) Representative: Hoefer & Partner Patentanwälte mbB

(56) References cited:
- YUANCHIEH (CARLSON) LIN ET AL: "Clarification of 5GS registration result value handling", vol. 3GPP CT 1, no. Online; 20220818 - 20220826, 11 August 2022 (2022-08-11), XP052185526, Retrieved from the Internet <URL:https://www.3gpp.org/ftp/tsg_ct/WG1_mm-cc-sm_ex-CN1/TSGC1_137e/Docs/C1-224682.zip C1-224682_Clarification of 5GS registration result value handling_24501_CR4479.docx> [retrieved on 20220811]
- "3rd Generation Partnership Project; Technical Specification Group Core Network and Terminals; Non-Access-Stratum (NAS) protocol for 5G System (5GS); Stage 3; (Release 17)", 27 June 2022 (2022-06-27), XP052201477, Retrieved from the Internet <URL:https://ftp.3gpp.org/3guInternal/3GPP_ultimate_versions_to_be_transposed/sentToDpc/24501-h71.zip 24501-h71.docx> [retrieved on 20220627]

## Description

### Field of the Invention

This invention relates to wireless communication capable of 5G registration resultant value handling when UE is registered to networks via both 3GPP access and non-3GPP access.

### Background of the Invention

Third generation partnership project (3GPP) and 5G New Radio (NR) mobile telecommunication systems provide high data rate, lower latency and improved system performances. In 3GPP NR, 5G terrestrial New Radio (NR) access network includes a plurality of base stations, e.g., Next Generation Node-Bs (gNBs), communicating with a plurality of mobile stations referred as user equipment (UEs). Orthogonal Frequency Division Multiple Access (OFDMA) has been selected for NR downlink radio access scheme due to its robustness to multipath fading, higher spectral efficiency, and bandwidth scalability. Multiple access in the downlink is achieved by assigning different sub-bands (i.e., groups of subcarriers, denoted as resource blocks (RBs)) of the system bandwidth to individual users based on their existing channel condition.

Operators are seeking ways to balance data traffic between mobile networks and non-3GPP access in a way that is transparent to users and reduces mobile network congestion. In 5GS, UEs can be simultaneously connected to both 3GPP access and non-3GPP access (using non-access stratum (NAS) signalling), thus the 5GS is able to take advantage of these multiple accesses to improve the user experience and optimize the traffic distribution across various accesses. Accordingly, UE can register to one or more networks over 3GPP access, over non-3GPP access, or over both 3GPP and non-3GPP. For example, 3GPP document 24501-H71 discloses Non-Access Stratum protocol for 5G system.

After UE transmits a REGISTRATION REQUEST message to the network, UE receives a REGISTRATION ACCEPT message, which carries a 5GS registration result value in the 5GS registration result IE. If the 5GS registration result value indicates "3GPP access", the UE consider itself as being registered to 3GPP access only. If the 5GS registration result value indicates "non-3GPP access", the UE consider itself as being registered to non-3GPP access only. If the 5GS registration result value indicates "3GPP access and non-3GPP access", the UE consider itself as being registered to both 3GPP access and non-3GPP access. However, the 5GS registration result value received over a first access may not indicate the UE registration status for a second access.

A solution is sought.

### Summary of the Invention

This invention aims at providing a method of determining UE registration status for a UE that is registered to networks over 3GPP and non-3GPP accesses. This is achieved by methods and a UE according to claims 1, 4 and 6, respectively. The dependent claims pertain to corresponding further developments and improvements.

As will be seen more clearly from the detailed description below, the claimed UE triggers registration to a Public Land Mobile Network (PLMN) or Standalone Non-Public Network (SNPN) over a second access, and receives a REGISTRATION ACCEPT message from the network over the second access. The REGISTRATION ACCEPT message carries a 5GS registration result IE having a 5GS registration result value. In case 1, UE is not registered to a first network over a first access. However, the registration result value indicates BOTH the first access AND the second access, which is inaccurate. Accordingly, UE should ignore the registration result value and considers itself NOT registered to the first access. In case 2, UE is registered to a first network over a first access. However, the registration result value indicates the second access ONLY, which is inaccurate. Accordingly, UE should ignore the registration result value and considers itself registered to BOTH the first access AND the second access. In case 3, UE triggers registration to a first network over a first access. However, the registration result value indicates the second access ONLY. Accordingly, UE should ignore the registration result value and considers itself registered to the first access ONLY or to BOTH the first access AND the second access.

### Brief Description of the Drawings

In the following, the invention is further illustrated by way of example, taking reference to the following drawings. Thereof:
FIG. 1 illustrates an exemplary 5G network and a method of determining registration status when a User Equipment (UE) is registered to the same or different networks over 3GPP access and non-3GPP access in accordance with one novel aspect.
FIG.2 illustrates simplified block diagrams of a user equipment (UE) and a network entity in accordance with embodiments of the current invention.
FIG.3 illustrates a first embodiment of UE performing registration over a second access and receives a registration result value when a UE is not registered to a first access in accordance with one novel aspect.
FIG.4 illustrates a second embodiment performing registration over a second access and receives a registration result value when a UE is registered to a first access in accordance with one novel aspect.
FIG.5 illustrates a third embodiment performing registration over a first access and receives a registration result value indicating a second access is registered in accordance with one novel aspect.
FIG.6 is a flow chart of a method of determining UE registration status for a UE that is registered to networks over 3GPP and non-3GPP accesses in accordance with one novel aspect.
FIG.7 is a flow chart of a method of determining UE registration status for a UE that is registered to different networks over 3GPP and non-3GPP accesses in accordance with one novel aspect.

### Detailed Description

Reference will now be made in detail to some embodiments of the invention, examples of which are illustrated in the accompanying drawings.

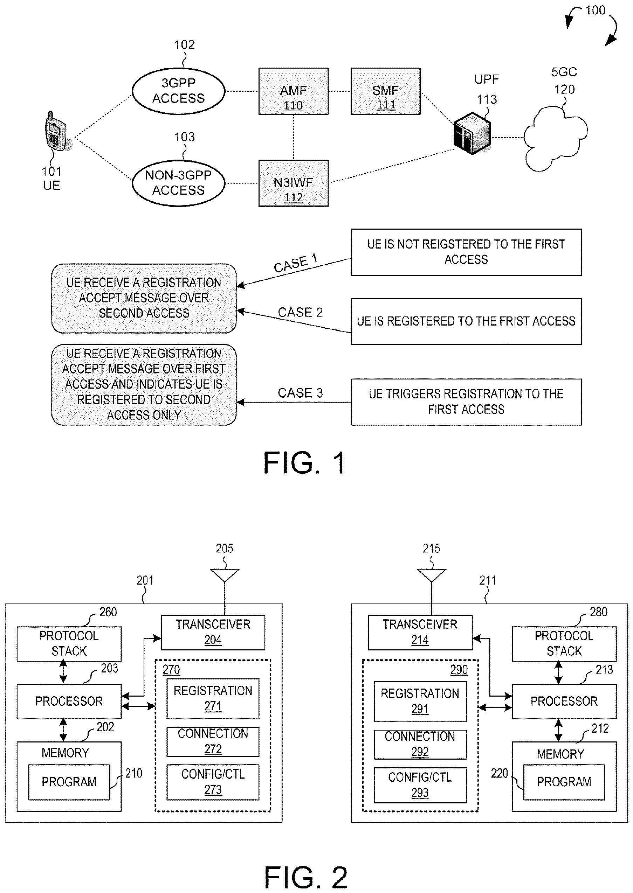

FIG.1 illustrates an exemplary 5G network 100 and a method of determining registration status when a User Equipment (UE) is registered to the same or different networks over 3GPP access and non-3GPP access in accordance with one novel aspect. 5G new radio (NR) network 100 comprises a user equipment (UE) 101, a 3GPP access 102 (e.g., a 3GPP radio access network (RAN)), a non-3GPP access 103 (e.g., a non-3GPP RAN), an access and mobility management function (AMF) 110, a session management function (SMF) 111, a non-3GPP interworking function (N3IWF) 112, a user plane function (UPF) 113, and a 5G core (5GC) data network 120. The AMF 110 communicates with the base stations in the 3GPP access 102, the SMF 111, and the UPF 113 for access and mobility management of wireless access devices in the 5G network 100. SMF 111 is primarily responsible for interacting with the decoupled data plane, creating, updating, and removing PDU sessions and managing session context with the UPF 113. N3IWF 112 interfaces to 5G core network control plane functions, responsible for routing messages outside 5G RAN.

In Access Stratum (AS) layer, an RAN provides radio access for the UE 101 via a radio access technology (RAT). In Non-Access Stratum (NAS) layer, the AMF 110 and the SMF 111 communicate with RAN and 5GC for access and mobility management and PDU session management of wireless access devices in the 5G network 100. The 3GPP access 102 may include base stations (gNBs or eNBs) providing radio access for the UE 101 via various 3GPP RATs including 5G, 4G, and 3G/2G. The non-3GPP access 103 may include access points (APs) providing radio access for the UE 101 via non-3GPP RAT including WiFi. The UE 101 can obtain access to data network 120 through 3GPP access 102, AMF 110, SMF 111, and UPF 113. The UE 101 can obtain access to data network 120 through non-3GPP access 103, N3IWF 112, AMF 110, SMF 111, and UPF 113. The UE 101 may be equipped with a single radio frequency (RF) module or transceiver or multiple RF modules or transceivers for services via different RATs/CNs. In some examples, UE 101 may be a smart phone, a wearable device, an Internet of Things (IoT) device, a tablet, etc.

In 5GS, UEs can be simultaneously connected to both 3GPP access and non-3GPP access (using non-access stratum (NAS) signalling), thus the 5GS is able to take advantage of these multiple accesses to improve the user experience and optimize the traffic distribution across various accesses. Accordingly, a UE can register to one or more networks in 5GS over 3GPP access, over non-3GPP access, or over both 3GPP and non-3GPP. After UE transmits a REGISTRATION REQUEST message to the network, UE receives a REGISTRATION ACCEPT message, which carries a 5GS registration result value in the 5GS registration result IE. If the 5GS registration result value indicates "3GPP access", the UE consider itself as being registered to 3GPP access only. If the 5GS registration result value indicates "non-3GPP access", the UE consider itself as being registered to non-3GPP access only. If the 5GS registration result value indicates "3GPP access and non-3GPP access", the UE consider itself as being registered to both 3GPP access and non-3GPP access. However, the 5GS registration result value received over a first access may not accurately indicate the UE registration status for a second access, especially when the UE is registered to different networks.

In accordance with one novel aspect, a method of determining UE registration status for a UE that is registered to networks over 3GPP and non-3GPP accesses is proposed. As depicted in FIG.1 (130), UE 101 may send a REGISTRATION REQUEST message to a Public Land Mobile Network (PLMN) or Standalone Non-Public Network (SNPN) over a second access, and receives a REGISTRATION ACCEPT message from the network over the second access. The REGISTRATION ACCEPT message carries a 5GS registration result IE having a 5GS registration result value. In case 1, UE 101 is not registered to a first network over a first access. However, the registration result value indicates BOTH the first access AND the second access, which is inaccurate. Accordingly, UE 101 should ignore the registration result value and considers itself NOT registered to the first access. In case 2, UE 101 is registered to a first network over a first access. However, the registration result value indicates the second access ONLY, which is inaccurate. Accordingly, UE 101 should ignore the registration result value and considers itself registered to BOTH the first access AND the second access. In case 3, UE 101 triggers registration to a first network over a first access. However, the registration result value indicates the second access ONLY. Accordingly, UE 101 should ignore the registration result value and considers itself registered to the first access ONLY or to BOTH the first access AND the second access.

FIG.2 illustrates simplified block diagrams of wireless devices, e.g., a UE 201 and a network entity 211 in accordance with embodiments of the current invention. Network entity 211 may be a base station and/or an AMF/SMF. Network entity 211 has an antenna 215, which transmits and receives radio signals. A radio frequency RF transceiver module 214, coupled with the antenna, receives RF signals from antenna 215, converts them to baseband signals and sends them to processor 213. RF transceiver 214 also converts received baseband signals from processor 213, converts them to RF signals, and sends out to antenna 215. Processor 213 processes the received baseband signals and invokes different functional modules to perform features in base station 211. Memory 212 stores program instructions and data 220 to control the operations of base station 211. In the example of FIG. 2, network entity 211 also includes protocol stack 280 and a set of control function modules and circuits 290. Protocol stacks 280 includes Non-Access-Stratum (NAS) layer to communicate with an AMF/SMF/MME entity connecting to the core network, Radio Resource Control (RRC) layer for high layer configuration and control, Packet Data Convergence Protocol/Radio Link Control (PDCP/RLC) layer, Media Access Control (MAC) layer, and Physical (PHY) layer. In one example, control function modules and circuits 290 includes a registration circuit 291 that handles registration procedures, a connection handling circuit 292 that handles signaling connections, and a configuration and control circuit 293 that provides different parameters to configure and control UE of related functionalities including registration and paging. The network entity 211 can be one 5GS network component or more than one 5GS network components (e.g., access network + AMF + N3IWF + SMF, etc.).

Similarly, UE 201 has memory 202, a processor 203, and radio frequency (RF) transceiver module 204. RF transceiver 204 is coupled with antenna 205, receives RF signals from antenna 205, converts them to baseband signals, and sends them to processor 203. RF transceiver 204 also converts received baseband signals from processor 203, converts them to RF signals, and sends out to antenna 205. Processor 203 processes the received baseband signals and invokes different functional modules and circuits to perform features in UE 201. Memory 202 stores data and program instructions 210 to be executed by the processor to control the operations of UE 201. Suitable processors include, by way of example, a special purpose processor, a digital signal processor (DSP), a plurality of micro-processors, one or more micro-processor associated with a DSP core, a controller, a microcontroller, application specific integrated circuits (ASICs), file programmable gate array (FPGA) circuits, and other type of integrated circuits (ICs), and/or state machines. A processor in associated with software may be used to implement and configure features of UE 201.

UE 201 also includes protocol stacks 260 and a set of control function modules and circuits 270. Protocol stacks 260 includes NAS layer to communicate with an AMF/SMF/MME entity connecting to the core network, RRC layer for high layer configuration and control, PDCP/RLC layer, MAC layer, and PHY layer. Control function modules and circuits 270 may be implemented and configured by software, firmware, hardware, and/or combination thereof. The control function modules and circuits, when executed by the processors via program instructions contained in the memory, interwork with each other to allow UE 201 to perform embodiments and functional tasks and features in the network. In one example, control function modules and circuits 270 includes a registration handling circuit 271 that performs registration procedure with the network, a connection handling circuit 272 that handles RRC and NAS signaling connection, and a config and control circuit 273 that handles configuration and control parameters including determining UE access identity. In one embodiment, the UE receives a registration result value from a second network over a second access that indicates a registration status of a first network over a first access. The UE ignores the registration result value because it does not accurately indicate the registration status of the first network over the first access.

The 5GS registration result IE can carry three different 5GS registration result values. If the 5GS registration result value = "3GPP access", then the UE should consider itself as being registered to 3GPP access only, and not registered to non-3GPP access. If the UE is in 5GMM-REGISTERED state over non-3GPP access and on the same PLMN as 3GPP access, then the UE enters state 5GMM-DEREGISTERED. If the 5GS registration result value = "non-3GPP access", then the UE should consider itself as being registered to non-3GPP access only, and not registered to 3GPP access. If the UE is in 5GMM-REGISTERED state over 3GPP access and on the same PLMN as non-3GPP access, then the UE enters state 5GMM-DEREGISTERED. If the 5GS registration result value = "3GPP access and non-3GPP access", then the UE should consider itself as being registered to both 3GPP access and being registered to non-3GPP access.

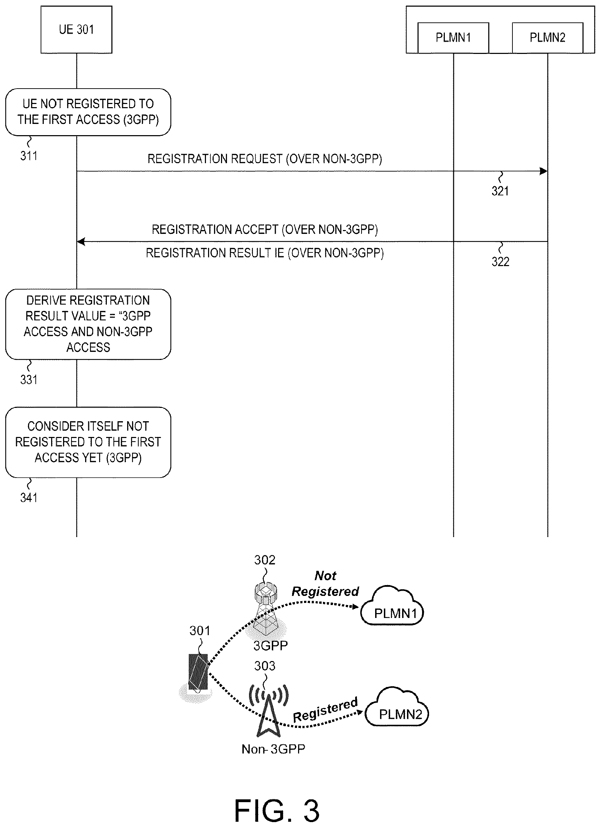

FIG.3 illustrates a first embodiment of UE performing registration over a second access and receives a registration result value when a UE is not registered to a first access in accordance with one novel aspect. In step 311, UE 301 determines that it is not registered to PLMN1 over a first access, e.g., 3GPP access 302. In step 321, UE 301 triggers a registration by sending a REGISTRATION REQUEST message to PLMN2 over a second access, e.g., non-3GPP access 303. In step 322, UE 301 receives a REGISTRATION ACCEPT message from PLMN2 over the second access type. The REGISTRATION ACCEPT message comprises a 5GS registration result IE, which carries a 5GS registration result value. In step 331, UE 301 derives the 5GS registration result value = "3GPP access and non-3GPP access", indicating that the UE is registered to both networks over 3GPP access and over non-3GPP access. However, UE 301 knows that it is not registered to the first PLMN1. Since the 5GS registration result value is received over non-3GPP access, it may not accurately indicate the registration status for PLMN1 over 3GPP access. As a result, UE 301 ignores the received 5GS registration result value with respect to 3GPP access, and still considers itself NOT YET registered to the first PLMN1 over 3GPP access.

In FIG. 3, UE 301 can access PLMN1 over 3GPP access 302 via a first AMF1, and UE 301 can access PLMN2 over non-3GPP access 303 via a second AMF2. If PLMN1 and PLMN2 belong to the same network, then AMF1 and AMF2 can be the same network entity. However, the UE 301 may deregister locally without notifying the AMF1 or AMF2. As a result, the AMF1 will provide wrong results. On the other hand, if PLMN1 and PLMN2 are two different networks, then AMF1 and AMF2 are two different entities. As a result, AMF1 may not know the current configuration and status of the UE with respect to non-3GPP access/PLMN2 that is stored in AMF2, and AMF2 may not know the current configuration and status of the UE with respect to 3GPP access/PLMN1 that is stored in AMF1. In the embodiment of FIG. 3, UE 301 is not registered to PLMN1 over 3GPP access. AMF2 may not know the 5GS registration result over 3GPP access that is stored in AMF1. When UE 301 receives the 5GS registration result IE, and when the 5GS registration result value indicates that the UE is registered to both 3GPP access and non-3GPP access, UE 301 thus ignores the 5GS registration result value with respect to 3GPP access, and considers itself NOT YET registered to the first PLMN1 over 3GPP access. However, UE 301 considers itself registered to the second PLMN2 over non-3GPP access based on the 5GS registration result value.

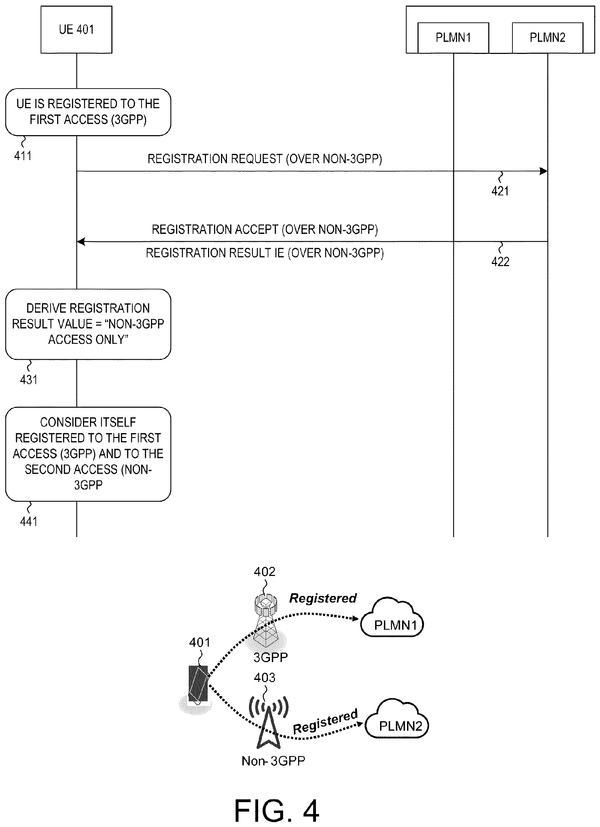

FIG.4 illustrates a second embodiment performing registration over a second access and receives a registration result value when a UE is registered to a first access in accordance with one novel aspect. In step 411, UE 401 determines that it is registered to PLMN1 over a first access, e.g., 3GPP access 402. In step 421, UE 401 triggers a registration by sending a REGISTRATION REQUEST message to PLMN2 over a second access, e.g., non-3GPP access 403. In step 422, UE 401 receives a REGISTRATION ACCEPT message from PLMN2 over the second access type. The REGISTRATION ACCEPT message comprises a 5GS registration result IE, which carries a 5GS registration result value. In step 431, UE 401 derives the 5GS registration result value = "non-3GPP access only", indicating that the UE is registered to PLMN2 over non-3GPP access only. However, UE 401 knows that it is registered to the first PLMN1. Since the 5GS registration result value is received over non-3GPP access, it may not accurately indicate the registration status for PLMN1 over 3GPP access. As a result, UE 401 ignores the received 5GS registration result value with respect to 3GPP access, and considers itself being registered to the first PLMN1 over 3GPP access. However, UE 401 considers itself registered to the second PLMN2 over non-3GPP access based on the 5GS registration result value.

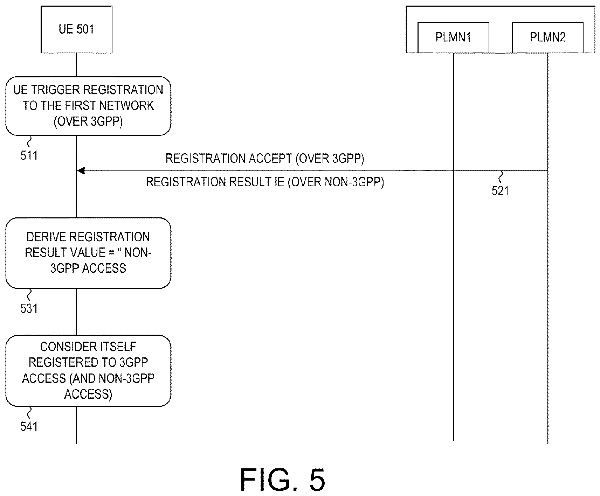

FIG.5 illustrates a third embodiment performing registration over a first access and receives a registration result value indicating UE is registered to a second access in accordance with one novel aspect. In step 511, UE 501 triggers a registration procedure to PLMN1 over a first access, e.g., 3GPP access. In step 521, UE 501 receives a REGISTRATION ACCEPT message from PLMN2 over the first access type, e.g., 3GPP access. The REGISTRATION ACCEPT message comprises a 5GS registration result IE, which carries a 5GS registration result value which indicating the UE 501 is registered to the second access, e.g., non-3GPP access. In step 531, UE 501 derives the 5GS registration result value = "non-3GPP access only", indicating that the UE is registered to PLMN2 over non-3GPP access only. However, UE 501 knows that it triggers registration to the first PLMN1 over 3GPP, and did not trigger registration to the second PLMN2 over non-3GPP access. As a result, UE 501 ignores the received 5GS registration result value with respect to 3GPP access, and still considers itself being registered to the first PLMN1 over 3GPP access, or considers itself being registered to both the first PLMN over 3GPP access and the second PLMN over non-3GPP access.

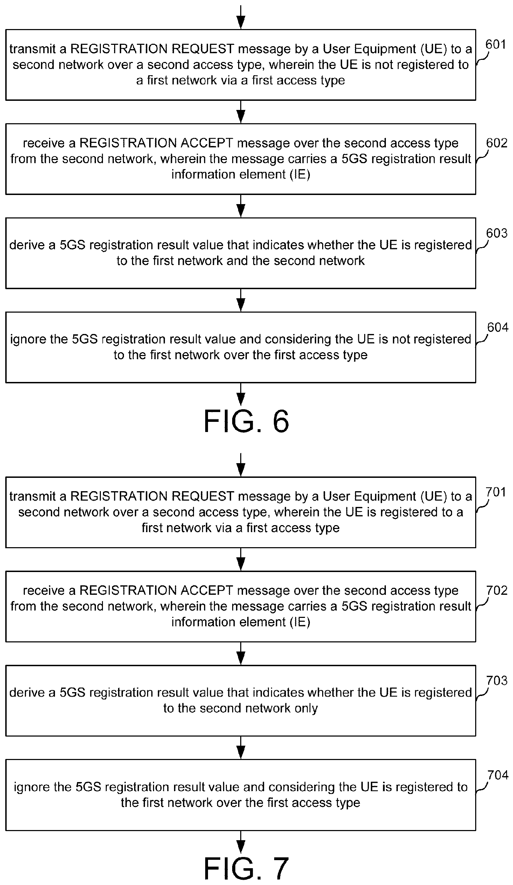

FIG. 6 is a flow chart of a method of determining UE registration status for a UE that is registered to different PLMN networks over 3GPP and non-3GPP accesses in accordance with one novel aspect. In step 601, a UE transmits a REGISTRATION REQUEST message to a second network over a second access type, wherein the UE is not registered to a first network via a first access type. In step 602, the UE receives a REGISTRATION ACCEPT message over the second access type from the second network, wherein the message carries a 5GS registration result information element (IE). In step 603, the UE derives a 5GS registration result value that indicates whether the UE is registered to the first network and the second network. In step 604, the UE ignores the 5GS registration result value and considers the UE is not registered to the first network over the first access type.

FIG. 7 is a flow chart of a method of determining UE registration status for a UE that is registered to different PLMN networks over 3GPP and non-3GPP accesses in accordance with one novel aspect. In step 701, a UE transmits a REGISTRATION REQUEST message to a second network over a second access type, wherein the UE is registered to a first network via a first access type. In step 702, the UE receives a REGISTRATION ACCEPT message over the second access type from the second network, wherein the message carries a 5GS registration result information element (IE). In step 703, the UE derives a 5GS registration result value that indicates whether the UE is registered to the second network only. In step 704, the UE ignores the 5GS registration result value and considers the UE is registered to the first network over the first access type.

## Claims

1. A method, comprising:
transmitting a REGISTRATION REQUEST message by a User Equipment, in the following also referred to as UE, (101, 201, 301) to a second network (100) over a second access type, wherein the UE is not registered to a first network (100) via a first access type, and wherein one of the first access type and the second access type is 3GPP access type (102), and the other one of the first access type and the second access type is non-3GPP access type (103);
receiving a REGISTRATION ACCEPT message over the second access type from the second network (100), wherein the message carries a 5GS registration result information element (IE); and
deriving a 5GS registration result value that is set to the first access type and the second access type indicating that the UE (101, 201, 301) is registered to both the first network (100) and the second network (100);
**characterized by**
considering the UE (101, 201, 301) is registered to the second network over the second access type and considering the UE (101, 201, 301) is not registered to the first network (100) over the first access type.

2. The method of Claim 1, **characterized in that** the first network (100) and the second network (100) are two different public land mobile networks (PLMNs).

3. The method of Claim 1, **characterized in that** the first network (100) and the second network (100) are the same public land mobile network (PLMN).

4. A method, comprising:
transmitting a REGISTRATION REQUEST message by a User Equipment, in the following also referred to as UE, (101, 201, 301) to a second network (100) over a second access type, wherein the UE (101, 201, 301) is registered to a first network (100) via a first access type, and wherein the one of the first access type and the second access type is 3GPP access type (102), and the other of the first access type and the second access type is non-3GPP access type (103);
receiving a REGISTRATION ACCEPT message over the second access type from the second network (100), wherein the message carries a 5GS registration result information element (IE); and
deriving a 5GS registration result value that is set to the second access type indicating that the UE (101, 201, 301) is registered to the second network (100) only;
**characterized by**
considering the UE (101, 201, 301) is registered to the first network (100) over the first access type and registered to the second network over the second access type.

5. The method of Claim 4, **characterized in that** the first network (100) and the second network (100) are two different public land mobile networks (PLMNs).

6. A User Equipment, in the following also referred to as UE, (101, 201, 301), comprising:
a transmitter (204);
a receiver (204); and
a control circuit (270),
wherein the transmitter, the receiver and the control circuit are configured to perform the method steps of any one of the preceding claims.

## Patentansprüche

1. Verfahren, umfassend:
Übertragen einer REGISTRATION REQUEST-Nachricht durch ein Benutzergerät, im Folgenden auch als UE bezeichnet, (101, 201, 301) an ein zweites Netzwerk (100) über einen zweiten Zugangstyp, wobei das UE nicht in einem ersten Netzwerk (100) über einen ersten Zugangstyp registriert ist, und wobei einer des ersten Zugangstyps und des zweiten Zugangstyps der 3GPP-Zugangstyp (102) ist und der andere des ersten Zugangstyps und des zweiten Zugangstyps der Nicht-3GPP-Zugangstyp (103) ist;
Empfangen einer REGISTRATION ACCEPT-Nachricht über den zweiten Zugangstyp von dem zweiten Netzwerk (100), wobei die Nachricht ein 5GS-Registrierungsergebnisinformationselement (IE) trägt; und
Ableiten eines 5GS-Registrierungsergebniswerts, der auf den ersten Zugangstyp und den zweiten Zugangstyp eingestellt ist, der anzeigt, dass das UE (101, 201, 301) sowohl in dem ersten Netzwerk (100) als auch in dem zweiten Netzwerk (100) registriert ist;
**gekennzeichnet durch**
Berücksichtigen, dass das UE (101, 201, 301) in dem zweiten Netzwerk über den zweiten Zugangstyp registriert ist, und Berücksichtigen, dass das UE (101, 201, 301) nicht in dem ersten Netzwerk (100) über den ersten Zugangstyp registriert ist.

2. Verfahren nach Anspruch 1, **dadurch gekennzeichnet, dass** das erste Netzwerk (100) und das zweite Netzwerk (100) zwei unterschiedliche öffentliche terrestrische Mobilfunknetze (PLMN) sind.

3. Verfahren nach Anspruch 1, **dadurch gekennzeichnet, dass** das erste Netzwerk (100) und das zweite Netzwerk (100) das gleiche öffentliche terrestrische Mobilfunknetz (PLMN) sind.

4. Verfahren, umfassend:
Übertragen einer REGISTRATION REQUEST-Nachricht durch ein Benutzergerät, im Folgenden auch als UE bezeichnet, (101, 201, 301) an ein zweites Netzwerk (100) über einen zweiten Zugangstyp, wobei das UE (101, 201, 301) in einem ersten Netzwerk (100) über einen ersten Zugangstyp registriert ist, und wobei der eine des ersten Zugangstyps und des zweiten Zugangstyps der 3GPP-Zugangstyp (102) ist und der andere des ersten Zugangstyps und des zweiten Zugangstyps der Nicht-3GPP-Zugangstyp (103) ist;
Empfangen einer REGISTRATION ACCEPT-Nachricht über den zweiten Zugangstyp von dem zweiten Netzwerk (100), wobei die Nachricht ein 5GS-Registrierungsergebnisinformationselement (IE) trägt; und
Ableiten eines 5GS-Registrierungsergebniswerts, der auf den zweiten Zugangstyp eingestellt ist, der anzeigt, dass das UE (101, 201, 301) nur in dem zweiten Netzwerk (100) registriert ist;
**gekennzeichnet durch**
Berücksichtigen, dass das UE (101, 201, 301) in dem ersten Netzwerk (100) über den ersten Zugangstyp registriert ist und in dem zweiten Netzwerk über den zweiten Zugangstyp registriert ist.

5. Verfahren nach Anspruch 4, **dadurch gekennzeichnet, dass** das erste Netzwerk (100) und das zweite Netzwerk (100) zwei unterschiedliche öffentliche terrestrische Mobilfunknetze (PLMN) sind.

6. Benutzergerät, im Folgenden auch als UE bezeichnet, (101, 201, 301), umfassend:
einen Sender (204);
einen Empfänger (204); und
eine Steuerschaltung (270),
wobei der Sender, der Empfänger und die Steuerschaltung konfiguriert sind, um die Verfahrensschritte nach einem der vorhergehenden Ansprüche durchzuführen.

## Revendications

1. Procédé, comprenant :
la transmission d'un message de DEMANDE D'ENREGISTREMENT par un Équipement Utilisateur, ci-après également appelé UE, (101, 201, 301) à un second réseau (100) sur un second type d'accès, dans lequel l'UE n'est pas enregistré auprès d'un premier réseau (100) via un premier type d'accès, et dans lequel l'un du premier type d'accès et du second type d'accès est un type d'accès 3GPP (102), et l'autre du premier type d'accès et du second type d'accès est un type d'accès non 3GPP (103) ;
la réception d'un message d'ACCEPTATION D'ENREGISTREMENT sur le second type d'accès en provenance du second réseau (100), dans lequel le message transporte un élément d'information (IE) de résultat d'enregistrement 5GS ; et
la dérivation d'une valeur de résultat d'enregistrement 5GS qui est réglée sur le premier type d'accès et le second type d'accès indiquant que l'UE (101, 201, 301) est enregistré auprès à la fois du premier réseau (100) et du second réseau (100) ;
**caractérisé par**
le fait de considérer que l'UE (101, 201, 301) est enregistré auprès du second réseau sur le second type d'accès et le fait de considérer que l'UE (101, 201, 301) n'est pas enregistré auprès du premier réseau (100) sur le premier type d'accès.

2. Procédé selon la revendication 1, **caractérisé en ce que** le premier réseau (100) et le second réseau (100) sont deux réseaux mobiles terrestres publics (PLMN) différents.

3. Procédé selon la revendication 1, **caractérisé en ce que** le premier réseau (100) et le second réseau (100) sont le même réseau mobile terrestre public (PLMN).

4. Procédé, comprenant :
la transmission d'un message de DEMANDE D'ENREGISTREMENT par un Équipement Utilisateur, ci-après également appelé UE, (101, 201, 301) à un second réseau (100) sur un second type d'accès, dans lequel l'UE (101, 201, 301) est enregistré auprès d'un premier réseau (100) via un premier type d'accès, et dans lequel l'un du premier type d'accès et du second type d'accès est un type d'accès 3GPP (102), et l'autre du premier type d'accès et du second type d'accès est un type d'accès non 3GPP (103) ;
la réception d'un message d'ACCEPTATION D'ENREGISTREMENT sur le second type d'accès en provenance du second réseau (100), dans lequel le message transporte un élément d'information (IE) de résultat d'enregistrement 5GS ; et
la dérivation d'une valeur de résultat d'enregistrement 5GS qui est réglée sur le second type d'accès indiquant que l'UE (101, 201, 301) est enregistré auprès du second réseau (100) uniquement ;
**caractérisé par**
le fait de considérer que l'UE (101, 201, 301) est enregistré auprès du premier réseau (100) sur le premier type d'accès et enregistré auprès du second réseau sur le second type d'accès.

5. Procédé selon la revendication 4, **caractérisé en ce que** le premier réseau (100) et le second réseau (100) sont deux réseaux mobiles terrestres publics (PLMN) différents.

6. Équipement utilisateur, ci-après également appelé UE, (101, 201, 301), comprenant :
un émetteur (204) ;
un récepteur (204) ; et
un circuit de commande (270),
dans lequel l'émetteur, le récepteur et le circuit de commande sont configurés pour effectuer les étapes de procédé selon l'une quelconque des revendications précédentes.
